# EUROPÄISCHE PATENTSCHRIFT

(11) **EP 1 936 333 B1**
(45) Veröffentlichungstag und Bekanntmachung des Hinweises auf die Patenterteilung: **24.07.2019**
(21) Anmeldenummer: 07023327.5
(22) Anmeldetag: 03.12.2007
(51) Int. Cl.: G01F 1/66

(54) **Ultraschalldurchflussmessgerät**
Ultrasound flow measuring device
Débitmètre à ultrasons

(30) Priorität: 19.12.2006 DE 102006060453; 26.01.2007 DE 102007004936
(43) Veröffentlichungstag der Anmeldung: 25.06.2008
(73) Patentinhaber: Krohne AG, 4019 Basel (CH)
(72) Erfinder: van Klooster, Jeroen Martin, 4003 DJ, Tiel (NL); Hoogendoorn, Cornelis Johannes, 4211 BG, Spijk (NL)
(74) Vertreter: Gesthuysen Patent- und Rechtsanwälte

(56) Entgegenhaltungen:
- WO-A-98/19296
- DE-A1- 19 503 714
- US-A1- 2004 011 141

## Beschreibung

Die Erfindung betrifft ein Ultraschalldurchflußmeßgerätgemäß dem Oberbegriff des Patentanspruchs 1.

Ultraschalldurchflußmeßgeräte zeigen im allgemeinen eine verschlechterte Meßgenauigkeit, wenn das durch das Meßrohr strömende Medium Durchflußstörungen aufweist und damit von einem völlig entwickelten laminaren oder turbulenten Strömungsprofil abweicht. Solche Störungen können z. B. durch Querschnittsveränderungen oder Biegungen der Rohre hervorgerufen werden, durch die das Medium strömt. Bei diesen Störungen unterscheidet man im allgemeinen drei Arten, nämlich axiale Störungen, tangentiale Störungen, wie Wirbel, und radiale Störungen. Tangentiale und radiale Störungen tragen nicht zu einer Veränderung des tatsächlichen Volumendurchflusses bei. Allerdings beeinflussen sie die Ultraschallmessung, wie im folgenden ausgeführt wird.

In einem Ultraschalldurchflußmeßgerät sind im allgemeinen wenigstens zwei Ultraschallwandler vorgesehen, die zusammen ein Ultraschallwandlerpaar bilden und dazu in Strömungsrichtung versetzt zueinander angeordnet sind. Einer der Ultraschallwandler sendet ein Ultraschallsignal aus, das durch das strömende Medium hindurchläuft und von dem anderen Ultraschallwandler empfangen wird. Dabei wird im allgemeinen so vorgegangen, daß auch von dem anderen Ultraschallwandler ein Ultraschallsignal ausgesandt werden kann, das von dem ersten Ultraschallwandler empfangen wird. Auf diese Weise laufen abwechselnd Ultraschallsignale mit bzw. gegen die Strömungsrichtung durch das strömende Medium. Aufgrund des Mitführeffektes in dem strömenden Medium ergeben sich unterschiedliche Laufzeiten in Strömungsrichtung bzw. entgegen der Strömungsrichtung. Sind die Länge des akustischen Pfads und der Winkel des akustischen Pfads relativ zur Strömungsrichtung bekannt, so kann mittels der Laufzeiten in Strömungsrichtung bzw. entgegengesetzt dazu auf die Strömungsgeschwindigkeit des Mediums zurückgeschlossen werden.

Weist eine Rohrleitung z. B. eine Biegung nach oben oder unten und nachfolgend eine Biegung nach rechts oder links auf, so kann man axiale sowie tangentiale Störungen im Strömungsprofil erwarten. Dabei führt die tangentiale Störung zu einer zusätzlichen Geschwindigkeitskomponente längs des durch den akustischen Pfad gegebenen Meßpfads und somit zu einer Verfälschung der für die insgesamt vorliegende Strömungsgeschwindigkeit maßgeblichen Laufzeiten.

Zur Lösung dieses Problems ist bisher derart vorgegangen worden, daß wenigstens zwei sich kreuzende Meßpfade in einer gemeinsamen Ebene verwendet werden. Sind die Winkel der beiden Meßpfade gegenüber der Strömungsrichtung jeweils gleich groß, so werden die unerwünschten tangentialen und radialen Geschwindigkeitskomponenten eliminiert, wenn die für die beiden Pfade jeweils bestimmten Geschwindigkeiten gemittelt werden.

Ein Nachteil liegt dabei darin, daß wenigstens die doppelte Anzahl von Ultraschallwandlern erforderlich ist. Müssen im Meßrohr mehr Ultraschallwandler vorgesehen werden, so müssen für diese im allgemeinen auch zusätzliche Wandlertaschen in der Wand des Meßrohrs bereitgestellt werden, was zu zusätzlichen Störungen der Strömung führt.

Ein anderer Ansatz zur Lösung des oben angesprochenen Problems liegt darin, V-förmige Signalpfade zu verwenden. Dabei wird so vorgegangen, daß die beiden Ultraschallwandler eines Ultraschallwandlerpaares auf einer gemeinsamen Seite des Meßrohrs vorgesehen werden, wobei auf der gegenüberliegenden Seite des Meßrohrs ein Ultraschallreflektor bereitgestellt wird. Je nach Krümmung des Meßrohrs in der jeweiligen Ebene kann ein derartiger Ultraschallreflektor schon alleine durch die Innenwand des Meßrohrs gebildet sein, es kann jedoch auch ein separater Ultraschallreflektor vorgesehen sein, z. B. in Form einer planen Platte. Dies gilt für den Stand der Technik wie auch für die weiter unten beschriebene Erfindung.

Ein von einem Ultraschallwandler ausgesandtes Ultraschallsignal läuft dann längs eines V-förmigen Signalpfads über den Ultraschallreflektor zu dem anderen Ultraschallwandler des Ultraschallwandlerpaars. Ebenso kann ein Ultraschallsignal auch in die andere Richtung ausgesandt werden. Wie zuvor beschrieben, wird damit grundsätzlich ebenfalls eine Anordnung erzielt, bei der eine Eliminierung der tangentialen und radialen Anteile durch Mittelung erzielt werden kann. Ein wesentlicher Vorteil liegt dabei darin, daß keine zusätzlichen Ultraschallwandler erforderlich sind.

Aus der DE 195 03 714 A1 ist ein Ultraschalldurchflußmeßgerät mit drei Ultraschallwandlerpaaren bekannt, wobei die Ultraschallwandler eines Ultraschallwandlerpaares über einen V-förmigen Signalpfad miteinander verbunden sind. Die Ultraschallwandler des ersten Ultraschallwandlerpaares sind in Längsrichtung des Meßrohres versetzt zueinander angeordnet, wohingegen die Ultraschallwandler des zweiten und des dritten Ultraschallwandlerpaares in Umfangsrichtung des Meßrohres versetzt zueinander angeordnet sind.

Aus der US 2004/0011141 A1 ist ein Ultraschalldurchflußmeßgerät bekannt. Bei diesem Gerät ist eine Mehrzahl V-förmiger Signalpfade vorgesehen, die in zueinander parallelen Ebenen verlaufen. Die Ultraschallwandlerpaare einerseits und die Ultraschallreflektoren andererseits sind jeweils auf separaten Seiten des Meßrohrs des Ultraschalldurchflußmeßgeräts vorgesehen. Dies ist insofern vorteilhaft, als daß wenigstens der oberste und der unterste V-förmige Signalpfad in geringem maximalen Abstand zur Innenwand des Meßrohrs angeordnet werden können. Es hat sich nämlich gezeigt, daß ein geringer Abstand zur Innenwand des Meßrohrs zu einer Verbesserung der Meßgenauigkeit führt, da insbesondere axiale Störungen bei einem derartigen Signalpfad mit hoher Genauigkeit ermittelt und damit eliminiert werden können. Ferner wird durch die gemeinsame Anordnung der Ultraschallwandler auf nur einer Seite des Meßrohrs die Wartung erleichtert, insbesondere wenn das Meßrohr nur schwer und gegebenenfalls nur von einer Seite her zugänglich ist.

Ein Ultraschalldurchflußmeßgerät mit einer Mehrzahl V-förmiger Signalpfade, die in zueinander parallelen Ebenen verlaufen, und bei dem die Ultraschallwandlerpaare einerseits und die Ultraschallreflektoren andererseits auf jeweils separaten Umfangshälften angeordnet sind, ist ebenfalls aus der WO 98/19296 bekannt.

Es hat sich gezeigt, daß eine Verwendung einer Mehrzahl V-förmiger Signalpfade in zueinander parallelen Ebenen, wie zuvor beschrieben, radiale und tangentiale Störungen der Strömung wesentlich besser eliminieren kann, als im Falle der weiter oben beschriebenen herkömmlichen Signalpfadanordnungen. Untersuchungen haben jedoch ergeben, daß immer noch Fehler von ca. 0,15 % auftreten.
Damit ist es die Aufgabe der Erfindung, ein derartiges Ultraschalldurchflußmeßgerät anzugeben, das eine beinahe vollständige Eliminierung der tangentialen und radialen Störungen bei der Ermittelung der Strömungsgeschwindigkeit ermöglicht.

Ausgehend von dem eingangs beschriebenen Ultraschalldurchflußmeßgerät ist diese Aufgabe dadurch gelöst, daß das erste Ultraschallwandlerpaar und der zweite Ultraschallreflektor auf der einen Umfangshälfte des Meßrohrs und das zweite Ultraschallwandlerpaar und der erste Ultraschallreflektor auf der anderen Umfangshälfte vorgesehen sind.

Erfindungsgemäß ist also vorgesehen, daß die Ultraschallwandlerpaare jeweils auf einander gegenüberliegenden Seiten angeordnet sind, so daß die Ultraschallsignale des einen Ultraschallwandlerpaares von der einen und die Ultraschallsignale des anderen Ultraschallwandlerpaars von der anderen Seite her in das strömende Medium ausgesandt werden. Dieser neuartigen Anordnung liegt die Erkenntnis zugrunde, daß die bisher noch vorhandenen Fehler bei der Eliminierung der tangentialen und radialen Störungen im wesentlichen darauf beruhen, daß diese Störungen in axialer Richtung nicht konstant sind. Durch die vorgeschlagene Anordnung der Signalpfade können jedoch darauf zurückzuführende Fehler im wesentlichen vollständig eliminiert werden, wie weiter unten genauer ausgeführt.

An dieser Stelle sei darauf hingewiesen, daß die Anordnung eines Ultraschallwandlers bzw. eines Ultraschallreflektors "auf' einer Umfangshälfte eine derartige Anordnung meint, die ein Aussenden, Empfangen bzw. Reflektieren von Ultraschallsignalen im Bereich der Innenwand des Meßrohrs ermöglicht.

Ferner sind mit "V-förmigen" Signalpfaden alle derartigen Formen von Signalpfaden gemeint, die dadurch erzielt werden, daß die Ultraschallwandler des Ultraschallwandlerpaares in Strömungsrichtung gesehen versetzt zueinander angeordnet sind und der Ultraschallreflektor in Strömungsrichtung gesehen an einem Ort dazwischen angeordnet ist. Insbesondere erfordert ein "V-förmiger" Signalpfad keinen bestimmten Winkel zwischen den beiden Schenkeln des "V" und auch keine gleiche Länge der Schenkel.

Gemäß der Erfindung ist vorgesehen, daß die beiden V-förmigen Signalpfade in unterschiedlichen Ebenen verlaufen. Dabei ist vorgesehen, daß die unterschiedlichen Ebenen sich innerhalb des Meßrohrs nicht schneiden. Ganz besonders bevorzugt ist dabei, daß die unterschiedlichen Ebenen parallel zueinander verlaufen.

Die weiter oben angegebenen erfindungsgemäßen Vorteile werden schon beim Vorsehen von nur zwei Ultraschallwandlerpaaren erzielt. Gemäß einer bevorzugten Weiterbildung der Erfindung ist jedoch wenigstens ein weiteres Ultraschallwandlerpaar mit einem zugeordneten Ultraschallreflektor zur Realisierung eines weiteren V-förmigen Signalpfads vorgesehen. Dabei ist es ganz besonders bevorzugt, daß eine Mehrzahl von zusätzlichen Ultraschallwandlerpaaren bereitgestellt wird, so daß in mehreren voneinander verschiedenen und vorzugsweise parallel zueinander verlaufenden Ebenen jeweils ein V-förmiger Signalpfad realisiert werden kann, wobei bei einander benachbarten Signalpfaden die Ultraschallwandlers jeweils auf unterschiedlichen Umfangshälften des Meßrohrs vorgesehen sind. In radialer Richtung des Meßrohrs gesehen erhält man somit V-förmige Signalpfade deren Öffnung bzw. Spitze abwechselnd auf der einen bzw. auf der anderen Umfangshälfte des Meßrohrs vorgesehen ist.

Es ist gemäß einer bevorzugten Weiterbildung der Erfindung vorgesehen, daß zwei Ultraschallreflektoren in Längsrichtung des Meßrohrs gesehen höchstens um den maximalen Abstand zwischen zwei Ultraschallwandlern eines Ultraschallwandlerpaares voneinander beabstandet sind. Dabei ist es jedoch ganz besonders bevorzugt, daß alle Ultraschallreflektoren in Längsrichtung des Meßrohrs gesehen auf derselben Länge des Meßrohrs angeordnet sind.

Neben der weiter oben angegebenen Aufgabe der Erfindung stellt sich häufig auch das Problem, daß das Ultraschalldurchflußmeßgerät mit einer Diagnosefunktion versehen werden soll, die eine Aussage darüber erlaubt, ob ein korrekter Meßbetrieb aufrechterhalten wird.

Ausgehend von dem eingangs beschriebenen Ultraschalldurchflußmeßgerät ist diese Aufgabe dadurch gelöst, daß ein drittes Ultraschallwandlerpaar mit einem zugeordneten Ultraschallreflektor zur Realisierung eines V-förmigen Signalpfads vorgesehen ist, der in einer derartigen Ebene verläuft, die die beiden anderen Ebenen innerhalb des Meßrohrs schneidet.

Es ist daher vorgesehen, daß ein dritter Signalpfad jedenfalls unter einem von Null verschiedenen Winkel gegenüber den beiden anderen Ebenen verläuft, so daß die beiden anderen Signalpfadebenen im Bereich des strömenden Mediums geschnitten werden. Auf diese Weise wird z. B. eine derartige Diagnosefunktion ermöglicht, mit der erfaßt werden kann, ob sich am Boden des Meßrohrs Schmutz angesammelt hat.

Aufgrund einer derartigen Ansammlung von Schmutz würde sich nämlich der Ort einer dort vorgesehenen Relexion zur Mitte des Meßrohrs hin verschieben, so daß sich auch der akustische Pfad verkürzt. Wird also im Laufe des Meßbetriebs eine sich verkürzende Laufzeit des dritten, die beiden anderen Ebenen schneidenden Signalpfads festgestellt, so kann dies ein Hinweis auf unerwünschte Schmutzablagerungen sein. Darüber hinaus ermöglicht die vorliegend beschriebene Anordnung eines dritten V-förmigen Signalpfads, der die beiden anderen Ebenen innerhalb des Meßrohrs schneidet, auch die zusätzlicher Erfassung eines Durchflußwertes, um die Genauigkeit der Durchflußmessung weiter zu steigern.

Dabei ist gemäß der Erfindung daher vorgesehen, daß die beiden anderen Ebenen sich innerhalb des Meßrohrs nicht schneiden. Ganz besonders bevorzugt ist dabei, daß die beiden anderen Ebenen parallel zueinander verlaufen und die dritte Ebene senkrecht zu den beiden anderen Ebenen verläuft. Gemäß einer bevorzugten Weiterbildung der Erfindung ist dabei vorgesehen, daß die dritte Ebene die Längsachse des Meßrohrs enthält.

Gemäß einer bevorzugten Weiterbildung der Erfindung ist es jedoch auch möglich, ein viertes Ultraschallwandlerpaar mit einem zugeordneten Ultraschallreflektor zur Realisierung eines V-förmigen Signalpfads vorzusehen, wobei dieser Signalpfad in einer derartigen Ebene verläuft, die die beiden anderen Ebenen innerhalb des Meßrohrs schneidet, wobei die dritte Ebene und die vierte Ebene jeweils unter einem von 90° verschiedenen Winkel relativ zu der ersten Ebene und der zweiten Ebene verlaufen und nicht parallel zueinander sind. Auf diese Weise kann z. B. die zuvor beschriebene Diagnosefunktion auf mehrere überprüfbare Reflektoxionsstellen ausgeweitet werden.

Andere bevorzugte Weiterbildungen ergeben sich dabei in Analogie zu den weiter oben im Zusammenhang mit der ersten erfindungsgemäßen Lösung beschriebenen Ausgestaltungsmöglichkeiten, insbesondere im Hinblick auf das Vorsehen einer Mehrzahl weiterer Ultraschallwandlerpaare, die insbesondere zur Bereitstellung von V-förmigen Signalpfaden in voneinander verschiedenen, vorzugsweise zueinander parallelen Ebenen vorgesehen sind.

Die Erfindung betrifft ein Ultraschalldurchflußmeßgerät, mit einem von einem Medium durchströmbaren Meßrohr, das im Querschnitt gesehen zwei Umfangshälften aufweist, wobei ein Ultraschallwandlerpaar vorgesehen ist, dem ein Ultraschallreflektor zugeordnet ist, die Ultraschallwandler eines jeden Ultraschallwandlerpaares auf einer gemeinsamen Umfangshälfte in Längsrichtung des Meßrohrs versetzt zueinander angeordnet sind und der dem jeweiligen Ultraschallwandlerpaar zugeordnete Ultraschallreflektor auf der anderen Umfangshälfte in Längsrichtung des Meßrohrs gesehen zwischen den beiden Ultraschallwandlern angeordnet ist, so daß ein von einem Ultraschallwandler eines Ultraschallwandlerpaars ausgesandtes Ultraschallsignal längs eines V-förmigen Signalpfads über den dem Ultraschallwandlerpaar zugeordneten Ultraschallreflektor zu dem anderen Ultraschallwandler des Ultraschallwandlerpaars gelangt.

Wie zuvor schon ausgeführt, sind die Ultraschallwandler im allgemeinen in Wandlertaschen vorgesehen, die in der Wand des Meßrohrs angeordnet sein können. Problematisch ist dabei, daß im Falle der Messung von Gasen mit Flüssigkeitsanteilen sich diese in den Wandlertaschen ablagern und dort zu Problemen führen können. Setzt sich z. B. ein Wassertropfen in einer Wandlertasche ab, so kann dieser Tropfen gegebenenfalls eine Brücke zwischen dem Ultraschallwandler und dem Meßrohr bilden, so daß es zu einer unerwünschten Schalleinkopplung von dem ansonsten von dem Meßrohr weitgehend schallisolierten Wandler in das Rohr kommt.

Damit liegt eine weitere Aufgabe der Erfindung darin, ein derartiges Ultraschalldurchflußmeßgerät anzugeben, bei dem die zuvor beschriebene Problematik vermieden wird.

Ausgehend von dem zuvor beschriebenen Ultraschalldurchflußmeßgerät ist diese Aufgabe dadurch gelöst, daß das Meßrohr derart orientiert ist, daß die Ultraschallwandler des Ultraschallwandlerpaares höher angeordnet sind als der zugeordnete Ultraschallreflektor.

Erfindungsgemäß wird damit gewährleistet, daß für die Ultraschallwandler vorgesehene Wandlertaschen zum Inneren des Meßrohrs hin geneigt sein können, so daß sie für flüssige und pastöse Medien selbstentleerend sind.

Gemäß der Erfindung ist wenigstens ein weiteres Ultraschallwandlerpaar mit einem zugeordneten Reflektor zur Realisierung eines weiteren V-förmigen Signalpfads vorgesehen, der in einer Ebene verläuft, die die Ebene des ersten V-förmigen Signalpfads innerhalb des Meßrohrs nicht schneidet, wobei die Ultraschallwandler des weiteren Ultraschallwandlerpaars höher angeordnet sind als der zugeordnete Ultraschallreflektor. Ganz besonders bevorzugt ist dabei vorgesehen, daß die Ebenen parallel zueinander verlaufen und die Ultraschallwandlerpaare auf der einen Umfangshälfte und die Ultraschallreflektoren auf der anderen Umfangshälfte des Meßrohrs vorgesehen sind. Damit wird auch beim Vorsehen einer Mehrzahl von V-förmigen Signalpfaden die zuvor angesprochene Selbstentleerung der Wandlertaschen für die Ultraschallwandler erzielt.

Die Erfindung wird durch den unabhängigen Anspruch 1 definiert.

Nachfolgend wird die Erfindung unter Bezugnahme auf die Zeichnung im Detail erläutert. In der Zeichnung zeigt
- Fig. 1 a, b: schematisch die Ausgestaltung eines Ultraschalldurchflußmeßgeräts gemäß einem ersten Teilaspekt der Erfindung,
- Fig. 2 a, b: schematisch den Verlauf der Signalpfade in Draufsicht bei dem Ultraschalldurchflußmeßgerät gemäß dem erstenTeilaspekt der Erfindung im Vergleich mit dem Stand der Technik,
- Fig. 3 a, b: schematisch ein Ultraschalldurchflußmeßgerät gemäß einem zweiten Teilaspekt der Erfindung,
- Fig. 4 a, b: schematisch ein Ultraschalldurchflußmeßgerät gemäß einem dritten Teilaspekt der Erfindung und
- Fig. 5: schematisch ein Ultraschalldurchflußmeßgerät gemäß einem vierten Teilaspekt der Erfindung.

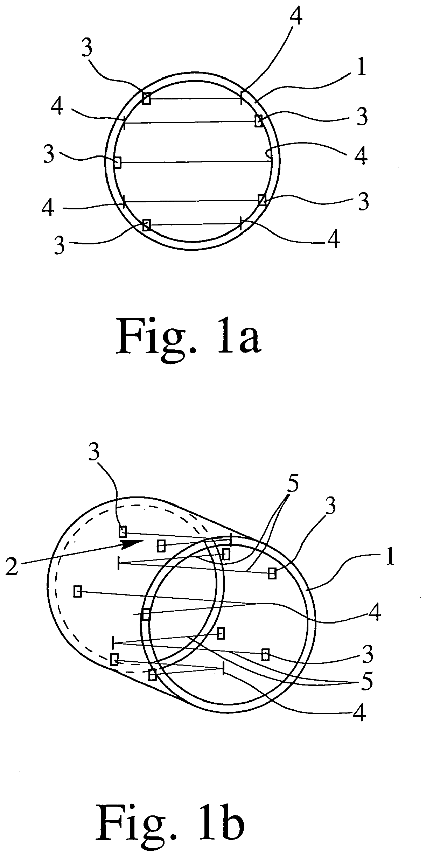

Aus den Fig. 1 a und 1 b ist ein Ultraschalldurchflußmeßgerät gemäß einem ersten Teilaspekt der Erfindung schematisch im Querschnitt bzw. in perspektivischer Ansicht ersichtlich. Dargestellt sind nur die erfindungswesentlichen Bestandteile des Ultraschalldurchflußmeßgeräts, nämlich ein von einem nicht weiter dargestellten Medium durchströmbares Meßrohr 1 und eine Mehrzahl von Ultraschallwandlerpaaren 2 mit jeweils einem Ultraschallwandler 3, wobei jedem Ultraschallwandlerpaar 2 ein Ultraschallreflektor 4 zugeordnet ist. Dabei sind die Ultraschallwandlerpaare 2 abwechselnd auf der einen bzw. der anderen Umfangshälfte des Meßrohrs 1 vorgesehen, und zwar derart, daß sich parallele Ebenen mit jeweils einem V-förmigen Signalpfad 5 ergeben. Durch die abwechselnde Anordnung der Ultraschallwandlerpaare 2 bzw. dementsprechend der Ultraschallreflektoren 4 auf der einen bzw. anderen Seite des Meßrohrs 1 ergibt es sich, daß die V-förmigen Signalpfade 5 ihre Öffnung abwechselnd nach der einen bzw. der anderen Seite haben. Dabei sei noch darauf hingewiesen, daß für den Signalpfad 5 in der Mitte die Innenwand des Meßrohrs selbst als Ultraschallreflektor 4 wirkt, also kein separater Ultraschallreflektor erforderlich ist.

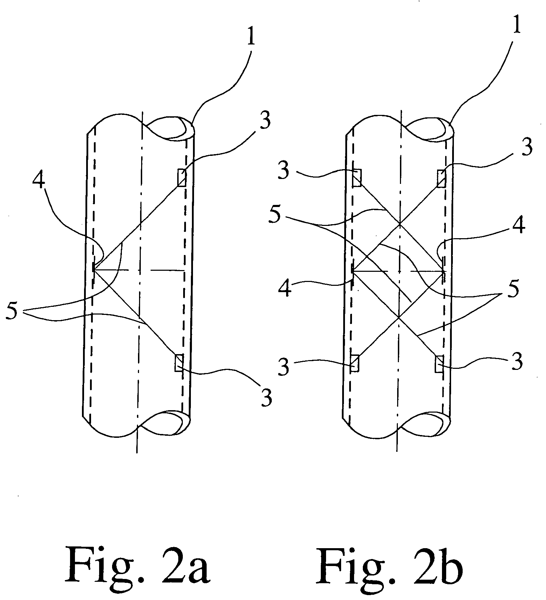

Dies ist schematisch auch in den Fig. 2 a und 2 b dargestellt. Diese zeigen in Draufsicht in Fig. 2 a einen Fall aus dem Stand der Technik, in dem ein einziger V-förmiger Signalpfad 5 ist oder mehrere V-förmige Signalpfade 5 vorgesehen sind, die jedoch ihre Öffnung alle nach rechts haben. Dagegen zeigt Fig. 2 b schematisch eine Anordnung der Signalpfade 5, wie bei dem in Fig. 1 a und b gezeigten ersten bevorzugten Ausführungsbeispiel der Erfindung, nämlich derart, daß wenigstens ein Signalpfad 5 mit einer Öffnung nach rechts und ein Signalpfad 5 mit einer Öffnung nach links existiert. Untersuchungen haben gezeigt, daß damit die Meßgenauigkeit erheblich verbessert werden kann.

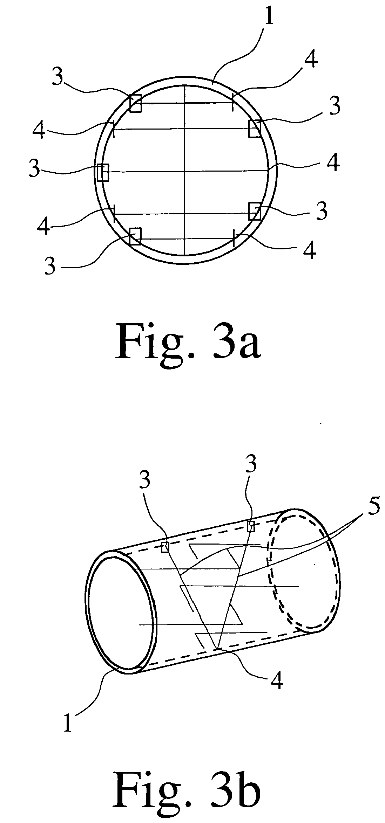

Aus den Fig. 3 a und 3 b ist nun ein Ultraschalldurchflußmeßgerät gemäß einem zweiten Teilaspekt der Erfindung ersichtlich, nämlich einerseits in einer Querschnittsansicht und andererseits schematisch in einer perspektivischen Ansicht. Bei diesem Ultraschalldurchflußmeßgerät sind die Ultraschallwandlerpaare 2 und die Ultraschallreflektoren 4 ebenfalls derart angeordnet, daß sich V-förmige Signalpfade in zueinander parallelen Ebenen ergeben. Zusätzlich ist nun vorgesehen, daß in einer Ebene senkrecht zu den parallelen Ebenen ein ebenfalls V-förmiger Signalpfad bereitgestellt wird, indem die dafür verwendeten Ultraschallwandler 3 oben am Meßrohr 1 angeordnet werden. Die Signalebene beinhaltet die Längsachse des Meßrohrs 1, so daß als Ultraschallreflektor 4 keine separate Einrichtung vorgesehen werden muß, sondern die Innenwand des Meßrohrs 1 dienen kann. Entsprechendes gilt für die mittlere Ebene der zueinander parallelen Signalpfadebenen.

Mit dieser Ausgestaltung wird eine derartige Diagnosefunktion erreicht, mit der erfaßt werden kann, ob sich am Boden des Meßrohrs 1 Schmutz angesammelt hat. Wie weiter oben schon ausgeführt, würde sich nämlich aufgrund einer derartigen Ansammlung von Schmutz der Ort einer dort vorgesehenen Reflexion zur Mitte des Meßrohrs 1 hin verschieben, so daß sich auch der akustische Pfad verkürzt. Wenn im Laufe der Zeit eine kürzere Laufzeit des die anderen Ebenen schneidenden Signalpfads festgestellt wird, so kann dies damit ein Hinweis auf unerwünschte Schmutzablagerungen sein. Außerdem wird durch diese Anordnung eines V-förmigen Signalpfads, der die anderen Ebenen innerhalb des Meßrohrs 1 schneidet, auch die zusätzlicher Erfassung eines weiteren Durchflußwertes ermöglicht, um die Genauigkeit der Durchflußmessung weiter zu steigern.

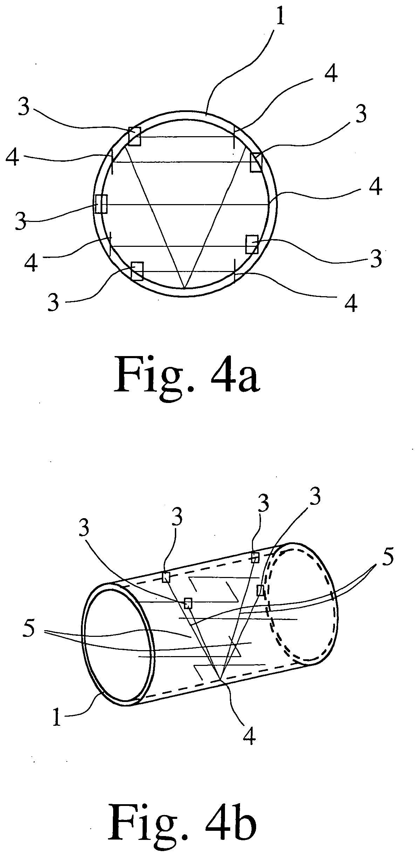

Aus Fig. 4 a und 4 b ist ein Ultraschalldurchflußmeßgerät gemäß einem dritten Teilaspekt der Erfindung ersichtlich, und zwar ebenfalls wieder in einer Querschnittsansicht sowie schematisch in einer perspektivischen Ansicht. Mit dieser Ausgestaltung können im wesentlichen die zuvor im Zusammenhang mit dem Ultraschalldurchflußmeßgerät gemäß dem zweiten bevorzugten Ausführungsbeispiel der Erfindung erläuterten Vorteile erzielt werden, wobei im Unterschied dazu vorgesehen ist, daß nicht nur eine Signalpfadebene die zueinander parallelen Signalpfadebenen schneidet, sondern zwei derartige Signalpfadebenen vorgesehen sind, die in einem Winkel zueinander verlaufen. Wenn auch vorliegend ein gemeinsamer Ultraschallreflektor 4 vorgesehen ist, so kann auf diese Weise die zuvor beschriebene Dia-gnosefunktion bezüglich der Verschmutzung des Meßrohrs 1 auf mehrere überprüfbare Reflektoxionsstellen ausgeweitet werden.

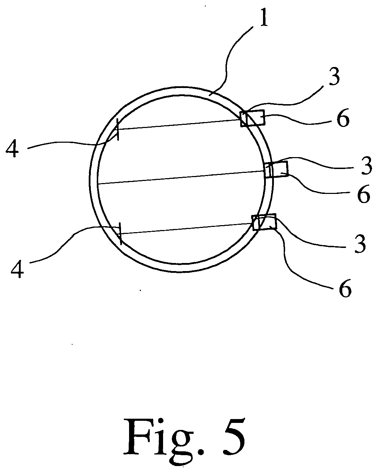

Aus Fig. 5 ist schließlich ein Ultraschalldurchflußmeßgerät gemäß einem vierten Teilaspekt schematisch in einer Querschnittsdarstellung ersichtlich. Maßgeblich ist dabei, daß die Ultraschallwandler 3 jeweils höher angeordnet sind als die zugeordneten Ultraschallreflektoren 4, so daß die Wandlertaschen 6, in denen die Ultraschallwandler 3 vorgesehen sind, nach unten hin geneigt sind. Wie weiter oben schon ausgeführt, gewährleistet dies, daß die Wandlertaschen 6 für flüssige und pastöse Medien selbstentleerend sind.

## Patentansprüche

1. Ultraschalldurchflußmeßgerät, mit einem von einem Medium durchströmbaren Meßrohr (1), das im Querschnitt gesehen zwei Umfangshälften aufweist,
wobei ein erstes Ultraschallwandlerpaar (2) und ein zweites Ultraschallwandlerpaar (2) vorgesehen sind,
wobei dem ersten Ultraschallwandlerpaar (2) ein erster Ultraschallreflektor (4) und dem zweiten Ultraschallwandlerpaar (2) ein zweiter Ultraschallreflektor (4) zugeordnet ist,
wobei die Ultraschallwandler (3) eines jeden Ultraschallwandlerpaares (2) auf einer gemeinsamen Umfangshälfte in Längsrichtung des Meßrohrs (1) versetzt zueinander angeordnet sind und der dem jeweiligen Ultraschallwandlerpaar (2) zugeordnete Ultraschallreflektor (4) auf der anderen Umfangshälfte in Längsrichtung des Meßrohrs (1) gesehen zwischen den beiden Ultraschallwandlern (3) angeordnet ist, so daß ein von einem Ultraschallwandler (3) eines Ultraschallwandlerpaares (2) ausgesandtes Ultraschallsignal längs eines V-förmigen Signalpfads (5) über den dem Ultraschallwandlerpaar (2) zugeordneten Ultraschallreflektor (4) zu dem anderen Ultraschallwandler (3) des Ultraschallwandlerpaares (2) gelangt,
wobei das erste Ultraschallwandlerpaar (2) mit dem zugeordneten ersten Ultraschallreflektor (4) eine Ebene aufspannt, in der der zugehörige V-förmige Signalpfad (5) liegt,
wobei das zweite Ultraschallwandlerpaar (2) mit dem zugeordneten zweiten Ultraschallreflektor (4) eine Ebene aufspannt, in der der zugehörige V-förmige Signalpfad (5) liegt, und
wobei die unterschiedlichen Ebenen der Ultraschallwandlerpaare (2) und der zugeordneten Ultraschallreflektoren (4) sich innerhalb des Meßrohrs (1) nicht schneiden,
**dadurch gekennzeichnet,**
**daß** das erste Ultraschallwandlerpaar (2) und der zweite Ultraschallreflektor (4) auf der einen Umfangshälfte und das zweite Ultraschallwandlerpaar (2) und der erste Ultraschallreflektor (4) auf der anderen Umfangshälfte vorgesehen sind und
**daß** eine Orientierung des Messrohrs (1) existiert, in der die Ultraschallwandler (3) des ersten Ultraschallwandlerpaars (2) höher als der zugeordnete erste Ultraschallreflektor (4) und die Ultraschallwandler (3) des zweiten Ultraschallwandlerpaars (2) höher als der zugeordnete zweite Ultraschallreflektor (4) angeordnet sind, so dass Wandlertaschen (6), in denen sich die Ultraschallwandler (3) des ersten Ultraschallwandlerpaars (2) und des zweiten Ultraschallwandlerpaars (2) befinden, nach unten hin geneigt sind.

2. Ultraschalldurchflußmeßgerät nach Anspruch 1, **dadurch gekennzeichnet, daß** wenigstens ein weiteres Ultraschallwandlerpaar mit einem zugeordneten Ultraschallreflektor (4) zur Realisierung eines weiteren V-förmigen Signalpfads (5) vorgesehen ist.

3. Ultraschalldurchflußmeßgerät nach einem der Ansprüche 1 oder 2, **dadurch gekennzeichnet, daß** zwei Ultraschallreflektoren (4) in Längsrichtung des Meßrohrs (1) gesehen höchstens um den maximalen Abstand zwischen zwei Ultraschallwandlern (3) eines Ultraschallwandlerpaares (2) voneinander beabstandet sind.

4. Ultraschalldurchflußmeßgerät nach Anspruch 3, **dadurch gekennzeichnet, daß** alle Ultraschallreflektoren (4) in Längsrichtung des Meßrohrs (1) gesehen auf derselben Länge des Meßrohrs (1) vorgesehen sind.

5. Ultraschalldurchflußmeßgerät nach einem der Ansprüche 1 bis 4, **dadurch gekennzeichnet, daß** ein viertes Ultraschallwandlerpaar (2) mit einem zugeordneten Ultraschallreflektor (4) zur Realisierung eines V-förmigen Signalpfads (5) vorgesehen ist, der in einer derartigen Ebene verläuft, die die beiden anderen Ebenen innerhalb des Meßrohrs (1) schneidet, wobei die dritte Ebene und die vierte Ebene jeweils unter einem von 90° verschiedenen Winkel relativ zu der ersten Ebene und der zweiten Ebene verlaufen und nicht parallel zueinander sind.

6. Ultraschalldurchflußmeßgerät, nach Anspruch 1
**dadurch gekennzeichnet,**
**daß** ein drittes Ultraschallwandlerpaar (2) mit einem zugeordneten Ultraschallreflektor (4) zur Realisierung eines V-förmigen Signalpfads (5) vorgesehen ist, der in einer von dem dritten Ultraschallwandlerpaar (2) und dem zugeordneten Ultraschallreflektor (4) aufgespannten Ebene verläuft, die die beiden anderen Ebenen innerhalb des Meßrohrs (1) schneidet.

7. Ultraschalldurchflußmeßgerät nach Anspruch 6, **dadurch gekennzeichnet, daß** die dritte Ebene die Längsachse des Meßrohrs enthält.

## Claims

1. Ultrasonic flowmeter, having a measuring tube (1) through which a medium can flow and which, viewed in cross-section, has two circumferential halves,
wherein a first pair of ultrasonic transducers (2) and a second pair of ultrasonic transducers (2) are provided,
wherein the first pair of ultrasonic transducers (2) is assigned a first ultrasonic reflector (4) and the second pair of ultrasonic transducers (2) is assigned a second ultrasonic reflector (4),
wherein the ultrasonic transducers (3) of each pair of ultrasonic transducers (2) are arranged on a common circumferential half offset with respect to one another in the longitudinal direction of the measuring tube (1), and the ultrasonic reflector (4) assigned to the respective pair of ultrasonic transducers (2) is arranged on the other circumferential half between the two ultrasonic transducers (3) when viewed in the longitudinal direction of the measuring tube (1), so that an ultrasonic signal emitted by an ultrasonic transducer (3) of an ultrasonic transducer pair (2) passes along a V-shaped signal path (5) via the ultrasonic reflector (4) assigned to the ultrasonic transducer pair (2) to the other ultrasonic transducer (3) of the ultrasonic transducer pair (2),
wherein the first pair of ultrasonic transducers (2) with the associated first ultrasonic reflector (4) spans a plane in which the associated V-shaped signal path (5) lies,
wherein the second pair of ultrasonic transducers (2) with the associated second ultrasonic reflector (4) spans a plane in which the associated V-shaped signal path (5) lies, and
wherein the different planes of the ultrasonic transducer pairs (2) and the associated ultrasonic reflectors (4) do not intersect within the measuring tube (1),
**characterized in**
**that** the first pair of ultrasonic transducers (2) and the second ultrasonic reflector (4) are provided on one circumferential half and the second pair of ultrasonic transducers (2) and the first ultrasonic reflector (4) are provided on the other circumferential half, and
**that** an orientation of the measuring tube (1) exists in which the ultrasonic transducers (3) of the first pair of ultrasonic transducers (2) are arranged higher than the associated first ultrasonic reflector (4) and the ultrasonic transducers (3) of the second pair of ultrasonic transducers (2) are arranged higher than the associated second ultrasonic reflector (4), so that transducer pockets (6), in which the ultrasonic transducers (3) of the first pair of ultrasonic transducers (2) and of the second pair of ultrasonic transducers (2) are located, are inclined downwardly.

2. Ultrasonic flowmeter according to claim 1, **characterized in that** at least one further pair of ultrasonic transducers with an associated ultrasonic reflector (4) is provided for implementing a further V-shaped signal path (5).

3. Ultrasonic flowmeter according to claim 1 or 2, **characterized in that** two ultrasonic reflectors (4), viewed in the longitudinal direction of the measuring tube (1), are spaced from one another by at most the maximum distance between two ultrasonic transducers (3) of an ultrasonic transducer pair (2).

4. Ultrasonic flowmeter according to claim 3, **characterized in that** all ultrasonic reflectors (4) are provided on the same length of the measuring tube (1) when viewed in the longitudinal direction of the measuring tube (1).

5. Ultrasonic flowmeter according to any one of claims 1 to 4, **characterized in that** a fourth pair of ultrasonic transducers (2) with an associated ultrasonic reflector (4) is provided for implementing a V-shaped signal path (5) extending in such a plane intersecting the other two planes within the measuring tube (1), wherein the third plane and the fourth plane each extend at an angle different from 90° relative to the first plane and the second plane and not parallel to each other.

6. Ultrasonic flowmeter according to claim 1
**characterized in**
**that** a third pair of ultrasonic transducers (2) with an associated ultrasonic reflector (4) is provided for implementing a V-shaped signal path (5) which extends in a plane spanned by the third pair of ultrasonic transducers (2) and the associated ultrasonic reflector (4) and which intersects the two other planes within the measuring tube (1).

7. Ultrasonic flowmeter according to claim 6, **characterized in that** the third plane contains the longitudinal axis of the measuring tube.

## Revendications

1. Débitmètre à ultrasons, comprenant un tube de mesure (1) pouvant être traversé par un fluide qui, vu en coupe transversale, possède deux moitiés de circonférence,
une première paire de transducteurs d'ultrasons (2) et une deuxième paire de transducteurs d'ultrasons (2) étant présentes,
un premier réflecteur d'ultrasons (4) étant associé à la première paire de transducteurs d'ultrasons (2) et un deuxième réflecteur d'ultrasons (4) à la deuxième paire de transducteurs d'ultrasons (2),
les transducteurs d'ultrasons (3) de chaque paire de transducteurs d'ultrasons (2) étant disposés décalés l'un par rapport à l'autre sur une moitié de circonférence commune dans la direction longitudinale du tube de mesure (1) et le réflecteur d'ultrasons (4) associé à la paire de transducteurs d'ultrasons (2) respective, vu dans la direction longitudinale du tube de mesure (1), étant disposé sur l'autre moitié de circonférence, entre les deux transducteurs d'ultrasons (3), de sorte qu'un signal ultrasonore émis par un transducteur d'ultrasons (3) d'une paire de transducteurs d'ultrasons (2) parvient jusqu'à l'autre transducteur d'ultrasons (3) de la paire de transducteurs d'ultrasons (2) par le biais du réflecteur d'ultrasons (4) associé à la paire de transducteurs d'ultrasons (2) le long d'un trajet de signal en forme de V (5),
la première paire de transducteurs d'ultrasons (2) avec le premier réflecteur d'ultrasons (4) associé couvrant un plan dans lequel se trouve le trajet de signal en forme de V (5) associé,
la deuxième paire de transducteurs d'ultrasons (2) avec le deuxième réflecteur d'ultrasons (4) associé couvrant un plan dans lequel se trouve le trajet de signal en forme de V (5) associé, et
les différents plans des paires de transducteurs d'ultrasons (2) et des réflecteurs d'ultrasons (4) associés ne se croisant pas à l'intérieur du tube de mesure (1),
**caractérisé en ce**
**que** la première paire de transducteurs d'ultrasons (2) et le deuxième réflecteur d'ultrasons (4) se trouvent sur l'une des moitiés de circonférence et la deuxième paire de transducteurs d'ultrasons (2) et le premier réflecteur d'ultrasons (4) se trouvent sur l'autre moitié de circonférence et
**qu'**il existe une orientation du tube de mesure (1) dans laquelle les transducteurs d'ultrasons (3) de la première paire de transducteurs d'ultrasons (2) sont disposés plus haut que le premier réflecteur d'ultrasons (4) associé et les transducteurs d'ultrasons (3) de la deuxième paire de transducteurs d'ultrasons (2) sont disposés plus haut que le deuxième réflecteur d'ultrasons (4) associé, de sorte que des poches de transducteur (6), dans lesquelles se trouvent les transducteurs d'ultrasons (3) de la première paire de transducteurs d'ultrasons (2) et de la deuxième paire de transducteurs d'ultrasons (2), sont inclinées vers le bas.

2. Débitmètre à ultrasons selon la revendication 1, **caractérisé en ce qu'**au moins une paire de transducteurs d'ultrasons supplémentaire, avec un réflecteur d'ultrasons (4) associé, est présente pour la réalisation d'un trajet de signal en forme de V (5) supplémentaire.

3. Débitmètre à ultrasons selon l'une des revendications 1 ou 2, **caractérisé en ce que** deux réflecteurs d'ultrasons (4), vus dans la direction longitudinale du tube de mesure (1), sont espacés l'un de l'autre au maximum de l'écart maximal entre deux transducteurs d'ultrasons (3) d'une paire de transducteurs d'ultrasons (2).

4. Débitmètre à ultrasons selon la revendication 3, **caractérisé en ce que** tous les réflecteurs d'ultrasons (4), vus dans la direction longitudinale du tube de mesure (1), se trouvent sur la même longueur du tube de mesure (1).

5. Débitmètre à ultrasons selon l'une des revendications 1 à 4, **caractérisé en ce qu'**une quatrième paire de transducteurs d'ultrasons (2), avec un réflecteur d'ultrasons (4) associé, est présente pour la réalisation d'un trajet de signal en forme de V (5), lequel s'étend dans un plan tel qu'il croise les deux autres plans à l'intérieur du tube de mesure (1), le troisième plan et le quatrième plan s'étendant respectivement sous un angle différent de 90° par rapport au premier plan et au deuxième plan et n'étant pas parallèles l'un à l'autre.

6. Débitmètre à ultrasons selon la revendication 1, **caractérisé en ce qu'**une troisième paire de transducteurs d'ultrasons (2), avec un réflecteur d'ultrasons (4) associé, est présente pour la réalisation d'un trajet de signal en forme de V (5), lequel s'étend dans un plan couvert par la troisième paire de transducteurs d'ultrasons (2) et le réflecteur d'ultrasons (4) associé qui croise les deux autres plans à l'intérieur du tube de mesure (1).

7. Débitmètre à ultrasons selon la revendication 6, **caractérisé en ce que** le troisième plan contient l'axe longitudinal du tube de mesure.
